# EUROPÄISCHE PATENTSCHRIFT

(11) **EP 1 677 038 B1**
(45) Veröffentlichungstag und Bekanntmachung des Hinweises auf die Patenterteilung: **23.01.2013**
(21) Anmeldenummer: 05026345.8
(22) Anmeldetag: 02.12.2005
(51) Int. Cl.: F16L 1/11, F16L 11/12

(54) **Leitungsrohr für fluide Medien**
Conduit for the transport of fluids
Tuyau d'une canalisation pour le transport de fluides

(30) Priorität: 31.12.2004 DE 102004063684
(43) Veröffentlichungstag der Anmeldung: 05.07.2006
(73) Patentinhaber: Wieland-Werke AG, 89070 Ulm (DE)
(72) Erfinder: Bührle, Reinhold, 89081 Ulm-Jungingen (DE); Werner, Rolf, 89278 Nersingen (DE)

(56) Entgegenhaltungen:
- EP-A- 1 262 701
- DE-C1- 19 752 081

## Beschreibung

Die Erfindung betrifft ein Leitungsrohr für fluide Medien.

Allgemein bekannt ist, Leitungen mit ldentifikationsmerkmalen zu versehen. Beispielsweise dienen Farbaufdrucke oder andere aufgedruckte Merkmale dazu, aus einer Vielzahl von Leitungen oder Kabeln einzelne auszuwählen. Es ist auch bekannt, Kabel mit Kabelkennfäden zu versehen, die der Identifikation dienen.

Weitere aufwändigere Identifikationsverfahren sind beispielsweise aus der DE 44 13 597 C2 bekannt, bei dem zur Selektion einer Leitung aus einer Vielzahl von Leitungen zur Übertragung von elektrischer Energie oder Signalen ein Lichtleiter zugeordnet ist, der an einem Ende an eine Lichtquelle angeschlossen wird, wobei entlang der Leitung das Licht zur Selektion der Leitung aus dem Lichtleiter ausgeleitet wird.

Im Bereich der Leitungsrohre in Form von Schlauchleitungen ist aus der Druckschrift DE 203 06 715 U1 eine Montage- und Kennzeichnungsvorrichtung bekannt, die eine Klemmeinrichtung und eine Aussparung zur formschlüssigen Fixierung des Schlauches aufweist, wobei ein System zur Kennzeichnung der Schlauchleitung mittels Schlagzeichenstempel vorhanden ist. Diese Vorrichtung dient dem ordnungsgemäßen Kennzeichnen von Schlauchleitungen mit Herstellerkennzeichen, dem maximalen Betriebsdruck sowie Jahr und dem Monat der Herstellung.

Eine Weiterentwicklung bezüglich in ihrer Funktion unterscheidbaren Rohren beschreibt die Druckschrift DE 299 11 625 U1. In der Schrift offenbart ist ein Rohr zur Durchleitung von fluiden Medien. Das Rohr ist mit einer umschließenden Schicht aus polymerem Werkstoff und einer diese Schicht teilweise über die Rohrlänge überdeckenden weiteren Schicht mit anderer Färbung aufgebaut. Je nach Einbaulage des Rohres, beispielsweise im Erdreich, weist jeweils eine Farbkennung nach oben, die so zur Kennzeichnung der Funktion des Rohres dient. Dies bringt allerdings den wesentlichen Nachteil mit sich, dass beim Montieren des Rohres an Biegungen stets darauf zu achten ist, dass immer dieselbe Farbkennung nach oben weist. Insbesondere bei senkrecht im Erdreich verlaufenden Rohrabschnitten ist es nicht mehr möglich, diese Vorgaben einzuhalten.

Des Weiteren ist aus der EP 1 262 701 A1 ein Rohr zum Transportieren von unterschiedlichen Flüssigkeiten bekannt, auf dem zur Kennzeichnung der jeweiligen Flüssigkeit Markierungen versehen sind, die in Längsrichtung verlaufen. Aus einer Vielzahl möglicher Funktionen eines einzelnen Rohres soll folglich eine ausgewählt werden, die das Rohr eindeutig kennzeichnet. Als wesentlich wird in diesem Zusammenhang angesehen, dass aus unterschiedlichen Markierungen an einem Rohr die geeignete Markierung für die jeweilige Funktion auf der Seite platziert wird, von der man sich dem Rohr nähert. Mit anderen Worten, bei einer Wand oder einem Boden zeigt die kennzeichnende Markierung nach vorne bzw. nach oben, also in der für einen Installateur üblicherweise zugänglichen Richtung. Allerdings gelingt es bei dieser Lösung nicht, für senkrecht im Erdreich oder senkrecht zur Wandfläche verlaufende Rohrabschnitte eine eindeutige Kennzeichnung vorzunehmen.

Der Erfindung liegt die Aufgabe zugrunde, ein Leitungsrohr dahingehend zu verbessern, dass jederzeit eine verwechslungsfreie Identifikation der durch das Rohr geleiteten Medien gestattet wird.

Die Erfindung wird durch die Merkmale des Anspruchs 1 wiedergegeben. Die weiteren Ansprüche 2 bis 7 betreffen vorteilhafte Aus- und Weiterbildungen der Erfindung.

Die Erfindung schließt die technische Lehre bezüglich eines Leitungsrohrs für fluide Medien ein, bei dem eine Auswahl von zumindest zwei unterscheidbaren Markierungen auf der Außenseite oder in einer Ummantelung angeordnet ist, wobei zumindest eine der Markierungen zur Kennzeichnung seiner Funktion wenigstens partiell entfernbar angeordnet ist.

Die Erfindung geht dabei von der Überlegung aus, dass ein multifunktional einsetzbares Leitungsrohr in seiner Funktion im Ursprungszustand noch nicht festgelegt ist und erst zu einem Zeitpunkt der Weiterverarbeitung seine Funktion definiert und dies nach außen kenntlich gemacht wird, beispielsweise erst durch eine Installation als Warm- oder Kaltwasserrohr. Zu diesem Zeitpunkt kann aus den zumindest zwei unterscheidbaren Markierungen eine am Rohr ausgewählt werden, die Auskunft über die entsprechende Funktion gibt.

Als Außenseite wird der gesamte Leitungsrohrteil betrachtet, der nicht mit dem Fluid in Berührung kommt. So können die Markierungen auf der Außenseite eines Rohres entweder für einen Betrachter offen sichtbar oder auch beispielsweise in einer Ummantelung eingebettet sein.

Die mit der Erfindung erzielten Vorteile bestehen insbesondere darin, dass unabhängig vom Rohrverlauf eine eindeutige Kennzeichnung seiner Funktion ermöglicht ist. Besonders vorteilhaft bei der verwechslungsfreien Identifikation des durch das Rohr geleiteten Mediums ist, unabhängig vom räumlichen Rohrverlauf, die wahlweise Kenntlichmachung der Funktion auch nach dem Verlegen. Auch nach Jahren kann noch eine eindeutige und verwechslungsfreie Identifikation seiner Funktion, beispielsweise als Warm- oder Kaltwasserrohr, gewährleistet werden. Wirtschaftlich besonders vorteilhaft wirkt sich aus, dass im Zusammenhang mit einer Lagerhaltung nur noch ein Rohrtyp eingelagert werden muss.

In vorteilhafter Ausgestaltung der Erfindung können am Leitungsrohr die Markierungen in Form von axial verlaufenden Bändern oder Fäden angeordnet sein. Hierdurch wird an jeder Stelle des Rohrverlaufes die Kennung seiner Funktion nach außen sichtbar.

Vorteilhafterweise können am Leitungsrohr die Markierungen in Form von spiralig oder radial umlaufenden Bändern oder Fäden angeordnet sein. Bei derartigen Anordnungen ist die Kennung der Funktion vollkommen unabhängig von der Lage nach der Verlegung, da sich nach relativ kurzer Distanz sich die Kennungen entlang des Rohres zyklisch wiederholen.

In bevorzugter Ausführungsform der Erfindung können bei einem Leitungsrohr die Markierungen unterschiedliche Farben und/oder Formen oder sonstige Kennzeichnungen aufweisen, wie beispielsweise Beschriftungen. Besonders zur Kennung bei Heizungsrohren können dabei übliche Farbgebungen wie beispielsweise blau für Rücklauf (kalt) und rot für Vorlauf (warm) Verwendung finden, sowie bei Trinkwasser die Farbe grün mit Beschriftung TW für kaltes Trinkwasser und grün mit Beschriftung TWW für warmes Trinkwasser und gelb für Gasleitungen.

In besonders bevorzugter Ausführungsform kann ein Leitungsrohr aus einem metallischen Innenrohr und einer das Innenrohr umschließenden Ummantelung bestehen, in der die Markierungen ein- oder aufgebracht sind. Hierdurch wird zur Kennzeichnung der Funktion beispielsweise einfach eine Markierung am Rohrende abgetrennt und die verbleibende Markierung als Kennzeichnung der Funktion herangezogen.

Vorteilhafterweise kann ein Leitungsrohr als Sanitärrohr für Kalt- und Warmwasser, als Leitungsrohr für die Gasinstallation oder als Heizungsrohr für Vorlauf-und Rücklaufleitungen verwendet werden.

Ausführungsbeispiele der Erfindung werden anhand von schematischen Zeichnungen näher erläutert.

### Darin zeigen:

- Fig. 1: ein Leitungsrohr mit zwei in die Ummantelung eingebetteten fadenförmigen Markierungen,
- Fig. 2: ein Leitungsrohr mit zwei auf der Ummantelung umlaufenden bandförmigen Markierungen,
- Fig. 3: ein Leitungsrohr mit zwei auf der Ummantelung in Längserstreckung verlaufenden bandförmigen Markierungen.

Einander entsprechende Teile sind in allen Figuren mit denselben Bezugszeichen versehen.

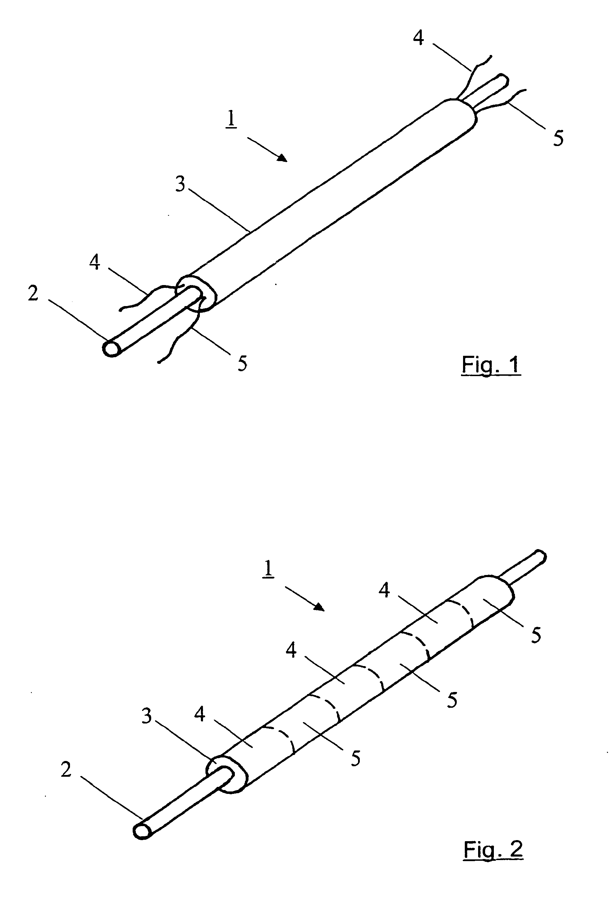

Fig. 1 zeigt schematisch ein Leitungsrohr 1 mit einem Innenrohr 2 und einer Ummantelung 3 mit zwei in die Ummantelung 3 eingebetteten fadenförmigen Markierungen 4 und 5. Der erste Faden 4 ist dabei zum zweiten Faden 5 unterscheidbar ausgebildet. Meist wird dies durch eine unterscheidbare Farbe realisiert, die die Funktionalität des Rohres signalisiert. Beispielsweise bietet sich dafür als Farbkennung im Sanitärrohrbereich rot und blau als Signal für die jeweilige Wassertemperatur an.

Wie in Fig. 1 dargestellt, wird bei Markierungen, die in der als Wärmeisolierung dienenden Ummantelung 3 eingebettet sind, beim Verlegevorgang nur das jeweilige nicht die Funktion kennzeichnende Ende abgetrennt oder bei kurzen Längen durch Herausziehen komplett entfernt. Dies ermöglicht zumindest eine eindeutige Kennzeichnung der Rohrenden, um eine eindeutige Zuordnung für einen Anschlussplan zur Verfügung zu haben.

Fig. 2 zeigt ein Leitungsrohr 1 mit zwei unterscheidbaren, auf der Ummantelung 3 umlaufenden bandförmigen Markierungen 4 und 5, die durch eine Perforierung voneinander abtrennbar ausgebildet sind. Bei Markierungen in Form von radial umlaufenden Bändern 4 und 5 ist die Kennung der Funktion vollkommen unabhängig von der Lage nach der Verlegung, da sich nach relativ kurzer Distanz die Kennungen entlang des Leitungsrohres 1 in einem farblich voneinander unterscheidbarem ersten und zweiten Band 4 bzw. 5 in kurzer Folge entlang des Rohrverlaufs wiederholt.

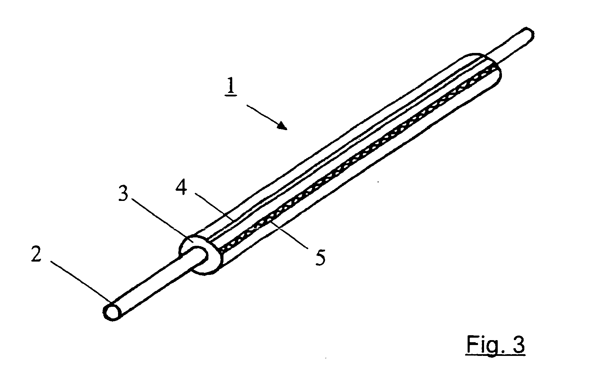

Fig. 3 zeigt ein Leitungsrohr 1 mit zwei auf der Ummantelung in Längserstreckung verlaufenden bandförmigen Markierungen 4 und 5. Das erste Band 4 weist eine andere Oberflächenstruktur auf als das zweite Band 5.

Alle in den Figuren dargestellten Leitungsrohre 1 sind auch nach dem Verlegen durch die Kennung entsprechend unterscheidbar. Beispielsweise können dadurch bei Sanitärrohren in der Baubranche über mehrere Stockwerke die jeweiligen Anschlüsse an Kalt- oder Warmwasserleitungen eindeutig markiert werden. Es bietet sich dabei an, dass jeweils die Markierungen 4 oder 5 auf der Oberfläche eines Leitungsrohrs 1 durch eine Klebeschicht befestigt sind, wobei beim Verlegevorgang jeweils die nicht zur Kennzeichnung benötigten Markierungen 4 oder 5 entsprechend entfernt werden.

### Bezugszeichenliste

- 1: Leitungsrohr
- 2: Innenrohr
- 3: Ummantelung
- 4: erste Markierung, Faden oder Band
- 5: zweite Markierung, Faden oder Band

## Patentansprüche

1. Leitungsrohr (1) für fluide Medien, bei dem eine Auswahl von zumindest zwei unterscheidbaren Markierungen (4, 5) angeordnet ist, wobei zumindest eine der Markierungen zur Kennzeichnung seiner Funktion wenigstens partiell entfernbar ist, **dadurch gekennzeichnet, dass** das Leitungsrohr (1) aus einem metallischen Innenrohr (2) und einer das Innenrohr (2) umschließenden Ummantelung (3) besteht, in der die Markierungen (4, 5) eingebracht sind, wobei die Markierungen in Form von axial verlaufenden oder spiralig umlaufenden Bändern oder Fäden angeordnet sind.

2. Leitungsrohr (1) nach Anspruch 1, **dadurch gekennzeichnet, dass** die Markierungen (4, 5) unterschiedliche Farben und/oder Formen oder sonstige Kennzeichnungen aufweisen.

3. Verwendung eines Leitungsrohrs (1) nach Anspruch 1 oder 2 als Sanitärrohr für Kalt- und Warmwasser.

4. Verwendung (1) eines Leitungsrohrs nach Anspruch 1 oder 2 als Leitungsrohr für die Gasinstallation.

5. Verwendung eines Leitungsrohrs (1) nach Anspruch 1 oder 2 als Heizungsrohr für Vorlauf- und Rücklaufleitungen.

## Claims

1. A pipe for fluid media, in which a selection of at least two distinguishable markings (4, 5) is arranged, at least one of the markings being at least partially removable to identify the pipe's function, **characterised in that** the pipe (1) consists of a metallic inner pipe (2) and a jacket (3) enclosing the inner pipe (2), in which jacket (3) the markings (4, 5) are introduced, the markings being arranged in the form of axially extending or spiral bands or threads.

2. A pipe (1) according to claim 1, **characterised in that** the markings (4, 5) exhibit different colours and/or shapes or other identifying features.

3. Use of a pipe according to claim 1 or claim 2 as a sanitary pipe for cold and hot water.

4. Use of a pipe according to claim 1 or claim 2 as a pipe for gas installations.

5. Use of a pipe according to claim 1 or claim 2 as a heating pipe for feed and return lines.

## Revendications

1. Tube de conduite (1) pour milieux ou agents fluides, sur lequel est agencé une sélection d'au moins deux marquages (4, 5) mutuellement discernables, au moins l'un des marquages pouvant être retiré au moins partiellement du tube en vue de caractériser sa fonction, **caractérisé en ce que** le tube de conduite (1) est constitué d'un tube intérieur (2) métallique et d'une enveloppe (3), qui entoure le tube intérieur (2) et dans laquelle sont insérés les marquages (4, 5), les marquages étant agencés sous la forme de bandes ou de fils s'étendant axialement ou s'enroulant en spirale.

2. Tube de conduite (1) selon la revendication 1, **caractérisé en ce que** les marquages (4, 5) présentent des couleurs et/ou des formes différentes, ou d'autres caractéristiques différentes.

3. Utilisation d'un tube de conduite (1) selon la revendication 1 ou la revendication 2, en tant que tube sanitaire pour eau froide et eau chaude.

4. Utilisation d'un tube de conduite (1) selon la revendication 1 ou la revendication 2, en tant que tube de conduite pour des installations de gaz.

5. Utilisation d'un tube de conduite (1) selon la revendication 1 ou la revendication 2, en tant que tube de chauffage pour des conduites du circuit aller et des conduites du circuit retour.
